# EUROPEAN PATENT SPECIFICATION

(11) **EP 2 386 004 B1**
(45) Date of publication and mention of the grant of the patent: **21.12.2016**
(21) Application number: 10700065.5
(22) Date of filing: 11.01.2010
(51) Int. Cl.: E03F 7/00, E03B 1/04, G01N 29/14, G01V 1/00, G01M 3/24

(54) **METHOD AND SYSTEM FOR CHECKING WHETHER A PIPE FILLED AT LEAST PARTLY WITH A GAS, OR A DISCHARGE APPLIANCE CONNECTED THERETO, IS CONNECTED TO A FIRST SEWER SYSTEM**
VERFAHREN UND SYSTEM ZUM ÜBERPRÜFEN, OB EIN ZUMINDEST TEILWEISE MIT EINEM GAS GEFÜLLTES ROHR ODER EINE DAMIT VERBUNDENE ABFÜHRVORRICHTUNG MIT EINEM ERSTEN KANALISATIONSSYSTEM VERBUNDEN IST
PROCÉDÉ ET SYSTÈME POUR VÉRIFIER SI UN TUYAU AU MOINS PARTIELLEMENT REMPLI DE GAZ OU UN APPAREIL D'ÉVACUATION QUI LUI EST RELIÉ, EST RACCORDÉ À UN PREMIER SYSTÈME D'ÉGOUT

(30) Priority: 09.01.2009 NL 1036405; 17.06.2009 NL 2003035
(43) Date of publication of application: 16.11.2011
(73) Proprietor: Moons-Brouwer, Marina Gerarda Adriana, 5141 JP Waalwijk (NL)
(72) Inventor: Moons, Johannes Maria, 5141 JP Waalwijk (NL)
(74) Representative: V.O.
(86) International application number: PCT/NL2010/050008
(87) International publication number: WO 2010/080031

(56) References cited:
- GB-A- 2 310 719
- NL-A- 7 614 101
- US-A- 5 553 498

## Description

The invention relates to a method and system for checking whether a pipe filled at least partly with a gas, or a discharge appliance connected thereto, is connected to a first sewer system.

At present, in sewerage, use is frequently made of a so-called completely separated or improved separated sewer system. Such a separated sewer system includes at least two separated sewer systems, one sewer system being adapted and intended for draining rainwater (herein the term rainwater will also be used to designate more generally storm water) and the other sewer system being adapted and intended for draining waste water, for example, from the water closet, kitchen and the like. This provides the advantage that storm water and waste water can be processed separately. For example, the relatively clean storm water generally imposes lower requirements on purification than the waste water. The sewer system for draining rainwater may also be designed as an infiltration sewer, whereby the rainwater collected in the sewer system is infiltrated into the soil present around the sewer system.

Generally, herein a pipe system in which storm water and/or waste water is collected to carry off such water from discharge appliances or piping is seen as a sewer system.

Herein the sewer system for storm water will also be designated as rainwater sewer, and the sewer system for waste water will also be designated as wastewater sewer.

A separated sewer system brings with it the circumstance that a building, such as a dwelling house, may be provided with at least two sewer connections, one for the storm water, the other for the waste water.

In practice, chiefly in the construction of new buildings or in alteration, it often happens that discharge appliances such as lavatory bowls are connected, for example, to the rainwater sewer, so that the rainwater is polluted with waste water. Since this rainwater is, in principle, discharged unpurified into the open water or infiltrated into the soil, this is an extremely undesirable situation. Conversely, it also happens often that the rainwater is discharged into the waste water system. As this waste water needs to be purified before it is discharged, this is an unwanted situation as well.

GB2310719A discloses a method for checking whether a pipe is filled at least partly with gas, or a discharge appliance connected thereto according to the preamble of claim 1 and a corresponding system according to the preamble of claim 10.

Accordingly, there is a need for a method and a system for checking whether a pipe or a discharge appliance connected thereto is connected to the right sewer system.

To this end, according to the invention, a method is provided according to claim 1 and a system is provided according to claim 10.

More particularly, according to the invention, a method is provided for checking whether a pipe filled at least partly with a gas, or a discharge appliance connected thereto, is connected to a first sewer system or a second sewer system of a separated sewer system, wherein the second sewer system carries a second airborne sound different from the first sound.

The inventor has realized that the sounds that travel through a first sewer system, and a second sewer system, of a separated sewer system typically can be distinguishable.

The first sewer system may concern, for example, a stormwater sewer and the second sewer system may concern, for example, a wastewater sewer. The sound that propagates through the stormwater sewer may be generated in particular by storm water supply to the first sewer system and storm water flow through the first sewer system. Upon rainfall, this can cause a characteristic sound, for example a monotonous sound, in the stormwater sewer, while in the absence of precipitation there may be little or no sound present. The sound that propagates through the wastewater sewer may be generated *inter alia* by a variety of random events such as toilets being flushed, water draining from washbasins, showers, industrial processes and the like, and waste water flowing through the second sewer system. This can cause a characteristic sound, for example a non-monotonous sound, in the wastewater sewer.

By presently detecting sound in or near the discharge appliance, such as a lavatory bowl or washbasin, and determining whether the detected sound is associated with the first sound or with the second sound, it can be simply established whether the respective discharge appliance is connected to the first sewer system or the second sewer system.

The use of a microphone makes it possible to detect a weak sound not detectable for the human ear, for example through adequate, for example electronic, amplification. Thus, a sensitive detection of the sound can be obtained. The use of the contact microphone placing the contact microphone against a wall of the pipe or the discharge appliance connected thereto, presents a further advantage. The inventor has realized that vibrations (sound) in the wall of a sewer system cannot travel over large distances, notably due to the presence of connections between discrete lengths of pipe of the sewer system. This aspect of the invention, however, makes use of the phenomenon that the airborne sound in the sewer system can travel over large distances via the air present therein, while the airborne sound also causes a wall of the pipe or the discharge appliance connected thereto to vibrate. Thus it is possible, by means of the contact microphone, to detect a sound associated with the sound in the sewer system in the wall of the discharge appliance or the wall of the pipe connecting the discharge appliance with the sewer system. This provides the advantage that it is not necessary to remove discharge appliances or, for example, to empty any water locks present, before detecting the sound.

The first sound is caused by means of a sound source placed in the first sewer system. Thus the first sound can be adjusted to increase its detectability.

It is possible that the sound source is aimed in the direction of the first sewer system which is in fluid communication with the discharge appliance. As a result, the amount of the first sound that arrives at the measuring location can be enlarged.

It is possible that the sound source produces a sound varying in time.

The sound varying in time has been found in practice to be better distinguishable from background sound, such as, for example, noise, than sound not varying in time. Preferably, the sound source generates a periodic sound.

In an embodiment, the sound source is alternately switched on and switched off. As a result, the sound varying in time is obtained, which is very well detectable.

Preferably, a period of the periodic sound or a duration of the sound source being switched on lasts longer than 0.5 seconds, preferably longer than 1 second, more preferably longer than 2 seconds. This provides the advantage that the sound can build up in the sewer system, thereby further increasing detectability.

Preferably, the first sound has a frequency between about 800 and about 1200 Hertz. At these frequencies, the first sound has been found to be very well detectable.

The invention will now be elucidated in more detail on the basis of non-limiting examples, with reference to the drawing. In the drawing:
Fig. 1 shows a schematic representation of a first example of a system according to the invention, and
Fig. 2 shows a schematic representation of a second example of a system according to the invention.

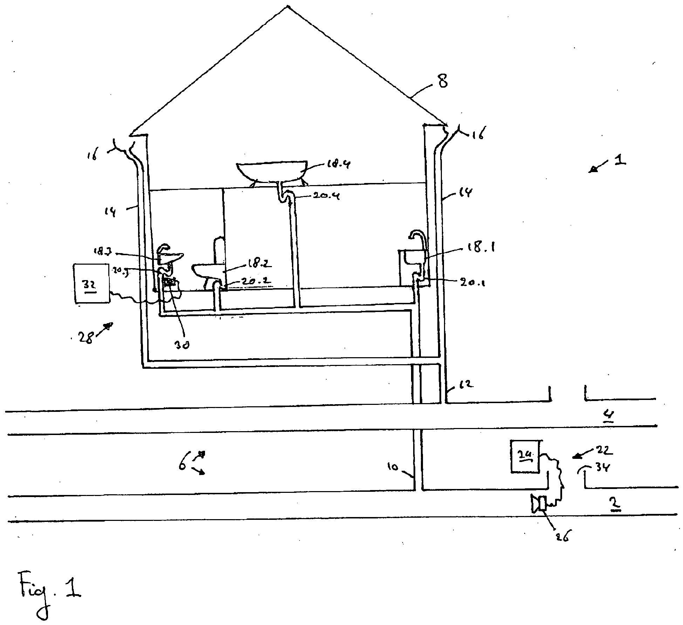

Fig. 1 shows a schematic representation of a first example of a system 1 for checking whether a discharge appliance is connected to a first sewer system 2 or a second sewer system 4 of a separated sewer system 6. In this example, the first sewer system 2 is a wastewater sewer and the second sewer system 4 is a stormwater sewer.

In this example, the system 1 is applied to a building 8, here a dwelling house. In this example, the building 8 comprises a first sewer connection 10 for waste water and a second sewer connection 12 for storm water.

In this example, the second sewer connection 12 is in fluid communication with drainpipes 14 for draining storm water that is collected by the roof gutters 16. In this example, the first sewer connection 10 is in fluid communication with a sink 18.1, toilet 18.2, washbasin 18.3 and bathtub 18.4, which are all examples of discharge appliances 18.i (i=1,2,3, ...). In this example, the discharge appliances 18.i are all connected with the first sewer connection 10 via a respective stench-trap 20.i.

The system 1 comprises in this example a sound source 22. The sound source 22 comprises in Fig. 1 a signal generator 24 and a loudspeaker 26. In this example, the loudspeaker 26 serves as an actuator to cause the air present in the sewer system to vibrate. It will be clear that the loudspeaker impacts upon the air directly, and does not vibrate the air by first vibrating a wall of the sewer system. The system 1 in this example comprises furthermore a sound recorder 28. The sound recorder comprises in Fig. 1 a contact microphone 30 and a signal processor 32.

The system 1 described thus far can be used as follows.

The sound source 22 is, at least partly, placed in the first sewer section 2. To this end, the sound source may, for example, be lowered into the first sewer system 2 via a manhole 34.

The contact microphone 30 is laid against a wall of the discharge appliance 18.i or, as in Fig. 1, against a pipe connecting the discharge appliance 18.i with the first sewer system 2 or the second sewer system 4 of the separated sewer system 6.

As soon as the sound source 22 is switched on, the first sewer system 2 will carry the airborne sound generated by the sound source 22, for example, in the direction of the first sewer connection 10. The airborne sound can travel through the first sewer system 2. The airborne sound will cause a wall sound in the wall of the first sewer system 2. Therefore, near the discharge appliance 18.i, in the wall, a wall sound will be present that is representative of the airborne sound in the discharge appliance 18.i or in the pipe connecting the discharge appliance 18.i with the first sewer system 2 or the second sewer system 4 of the separated sewer system 6.

With the aid of the contact microphone 30 the wall sound is detected in the discharge appliance 18.i or in the pipe connecting the discharge appliance 18.i with the first sewer system 2 or the second sewer system 4.

If the discharge appliance 18.i, as in Fig. 1, is connected with the first sewer system 2, the wall sound recorded by the contact microphone 30 will be associated in this example with the sound generated by the sound source 22. If the discharge appliance (for example, if the drainpipe 14 is chosen as discharge appliance) is connected with the second sewer system 4, the wall sound recorded by the contact microphone 30, in this example, will not be associated with the sound generated by the sound source 22. In this example, the second sewer system 4, due to the absence therein of the sound source, will carry a different airborne sound than the first sewer system 2. Thus, it can be simply established on the basis of this distinction whether the discharge appliance 18.i is connected with the first sewer system 2 or with the second sewer system 4.

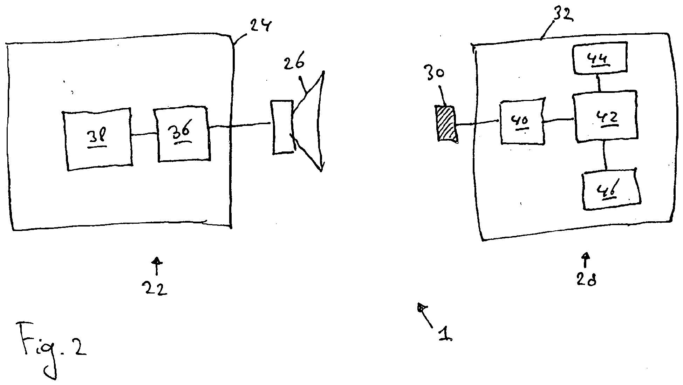

Fig. 2 shows the schematic representation of a second example of a system 1 according to the invention. In this example, the system 1 comprises the sound source 22. The sound source 22 comprises in Fig. 2 the signal generator 24 and a loudspeaker 26. In this example, the signal generator 24 comprises an amplifier 36. In this example, the signal generator comprises a control unit 38.

The control unit 38 is arranged for generating a sound varying in time. The control unit may be arranged, for example, for generating a periodic sound. The control unit can be arranged, for example, for alternately switching on and switching off an output signal, so that alternately sound and no sound is produced.

In this example, the control unit is so arranged that the sound source alternately generates a sound and is silent, while a duration of the sound source generating sound and the duration of the sound source being silent is longer than 0.5 seconds, preferably longer than 1 second, more preferably longer than 2 seconds. As a result, an alternating sound is produced which can be readily detected.

In this example, the sound source is arranged for generating a sound of a frequency between about 800 and about 1200 Hz, for example about 1000 Hz. It is possible that the frequency is settable for adjusting the frequency to the situation at the point of detection.

In the example of Fig. 2, the system 1 comprises sound recorder 28.

The sound recorder comprises in Fig. 2 the contact microphone 30 and the signal processor 32. The signal processor 32 comprises an amplifier 40 in this example. In this example, the signal processor 32 comprises a control unit 42. The control unit 42 in this example is connected with a representation device 44 for aurally and/or visually representing the received sound signal. The control unit 42 may furthermore be connected with memory 46 for storing detection data therein.

The sound source 22 and the sound recorder 28 are communicatively connected wirelessly. As a consequence, the sound recorder may be operated, for example, in synchronization with the sound source. Thus, the sound can be detected with higher accuracy.

In an embodiment, the signal processor 32, for example the control unit 42, is arranged to compare the received sound signal with data regarding the sound transmitted by the sound source 22. The data can relate to, for example, frequency, modulation, the above-mentioned duration and/or timing. The signal processor 32 can determine from this comparison whether the received sound signal is associated with the transmitted sound. The sound recorder can make the outcome of the determination known to a user, for example with the aid of the representation device 44. It will be clear that if the sound source 22 is communicatively connected with the sound recorder 28, the sound source can transfer the data regarding the sound transmitted by the sound source, via the communicative connection to the sound recorder 28.

In the foregoing description the invention has been described on the basis of specific examples of embodiments of the invention. It will be clear, however, that various modifications and adaptations can be made therein without departing from the scope of the invention as set out in the appended claims.

In the examples, it is determined with the aid of the contact microphone whether a pipe or a discharge appliance connected thereto is connected to a first sewer system or a second sewer system of a separated sewer system. It is also possible, however, to check whether a pipe or a discharge appliance connected thereto is connected to a first sewer system, wherein the first sewer system carries a first airborne sound, by placing the contact microphone against, for example a wall of, the pipe or the discharge appliance, by detecting with the aid of the contact microphone a sound in or at the pipe or the discharge appliance, and by determining whether the detected sound is associated with the first sound. Thus, it may be determined, for example, whether a discharge appliance is connected to a (specific) sewer system or not. It is also possible that the sound source is provided with a fastening system for fastening, at least a part of, the sound source in a sewer system. The fastening system may then be provided with aligning means for aligning the sound source with respect to the sewer system. Thus it is possible, for example, to place the loudspeaker on or near a centerline of a sewer pipe. Also, in this way, a centerline of the loudspeaker may be placed parallel, or at an angle unequal to zero, with respect to a centerline of the sewer pipe.

Other modifications, variations and alternatives, however, are also possible without departing from the appended claims. The description, drawings and examples must therefore be taken in an illustrative sense and not as limiting.

In the claims, reference numerals should not be construed as limiting. The word "comprises" does not exclude the presence of other features or steps than those recited in the claims. Further, the word "a" is not to be construed as being limited to "just one", but will be used to indicate "at least one" and will not exclude plurality.

## Claims

1. A method for checking whether a pipe filled at least partly with a gas, or a discharge appliance connected thereto, is connected to a first sewer system (2), wherein the first sewer system carries a first airborne sound, wherein the first sound is caused by means of a sound source (22) placed in the first sewer system, comprising
- placing a sound recorder (28) provided with a contact microphone (30) against, for example a wall of, the pipe or the discharge appliance (18.i),
- detecting with the aid of the contact microphone a sound in or at the pipe or the discharge appliance, and
- determining whether the detected sound is associated with the first sound, the method is **characterized by**
- providing a wireless communicative connection between the sound source (22) and the sound recorder (28).

2. A method according to claim 1, for checking whether the pipe filled at least partly with a gas, or the discharge appliance connected thereto, is connected to the first sewer system or to a second sewer system (14) of a separated sewer system, wherein the second sewer system carries a second airborne sound, different from the first sound.

3. A method according to claim 1 or 2, wherein the sound source is aimed in the direction of the first sewer system which is in fluid communication with the discharge appliance.

4. A method according to claim 1, 2 or 3, wherein the sound source generates a sound varying in time, such as a periodic sound, or wherein the sound source is alternately switched on and switched off.

5. A method according to claim 4, wherein a period of the periodic sound or a duration of the sound source being switched on and/or being switched off lasts longer than 0.5 seconds, preferably longer than 1 second, more preferably longer than 2 seconds.

6. A method according to any one of claim 5, wherein the first sound has a frequency of between about 800 and about 1200 Hertz.

7. A method according to any one of claims 1-6, wherein the sound recorder is operated in synchronization with the sound source.

8. A method according to any one of claims 1-7, further comprising
- transferring the data regarding the sound transmitted by the sound source via the communicative connection from the sound source to the sound recorder, wherein the data e.g. relates to frequency, modulation, duration and/or timing,
- comparing the received sound signal with data regarding the sound transmitted by the sound source.

9. A method according to any one of the preceding claims, wherein the first sewer system is a stormwater sewer and the second sewer system is a wastewater sewer.

10. A system (1) for the checking of whether a pipe filled at least partly with a gas, or a discharge appliance connected thereto, is connected to a first sewer system (2), comprising
- a sound source (22) for generating a first sound in the first sewer system,
- a sound recorder (28) provided with a contact microphone (30) for detecting a sound in the pipe or the discharge appliance; **characterized in that**
the sound source (22) and the sound recorder (28) are communicatively connected wirelessly.

11. A system according to claim 10, wherein the sound source is arranged for generating a sound varying in time, such as a periodic sound, or wherein the sound source is arranged for alternately switching on and switching off the first sound.

12. A system according to claim 10 or 11, wherein the sound recorder comprises a representation device for aurally and/or visually representing the detected sound.

13. A system according to claim 10, 11 or 12, wherein the sound recorder is arranged to operate in synchronization with the sound source.

14. A system according to anyone of claims 10-13, wherein the sound source is arranged to transfer the data regarding the sound transmitted by the sound source via the communicative connection to the sound recorder, wherein the data e.g. relates to frequency, modulation, duration and/or timing, and wherein the sound recorder is arranged to compare the received sound signal with data regarding the sound transmitted by the sound source.

15. A system according to any one of claims 10-14, wherein the system is arranged to determine whether the sound detected by the sound recorder is associated with the first sound generated by the sound source.

## Patentansprüche

1. Verfahren zum Prüfen, ob ein mindestens teilweise mit Gas gefülltes Rohr oder eine damit verbundene Abführvorrichtung mit einem ersten Kanalisationssystem (2) verbunden ist, wobei das erste Kanalisationssystem einen ersten luftübertragenen Schall trägt, wobei der erste Schall mittels einer Schallquelle (22) erzeugt wird, die in dem ersten Kanalisationssystem platziert ist, umfassend
- das Platzieren eines Schallrecorders (28), versehen mit einem Kontaktmikrofon (30), gegen beispielsweise eine Wand des Rohres oder der Abführvorrichtung (18i),
- das Erkennen, mittels des Kontaktmikrofons, eines Schalls in oder an dem Rohr oder der Abführvorrichtung, und
- das Bestimmen, ob der erkannte Schall mit dem ersten Schall assoziiert ist, das Verfahren **gekennzeichnet durch**
- das Bereitstellen einer drahtlosen kommunikativen Verbindung zwischen der Schallquelle (22) und dem Schallrecorder (28).

2. Verfahren nach Anspruch 1 zum Prüfen, ob das mindestens teilweise mit Gas gefüllte Rohr oder die damit verbundene Abführvorrichtung mit dem ersten Kanalisationssystem verbunden ist oder mit einem zweiten Kanalisationssystem (14) eines separaten Kanalisationssystems, wobei das zweite Kanalisationssystem einen zweiten luftübertragenen Schall trägt, der sich von dem ersten Schall unterscheidet.

3. Verfahren nach Anspruch 1 oder 2, wobei die Schallquelle in Richtung des ersten Kanalisationssystems, das in Flüssigkeitskommunikation mit der Abführvorrichtung ist, ausgerichtet ist.

4. Verfahren nach Anspruch 1, 2 oder 3, wobei die Schallquelle einen über die Zeit variierenden Schall erzeugt, wie beispielsweise einen periodischen Schall, oder wobei die Schallquelle abwechselnd ein- und ausgeschaltet wird.

5. Verfahren nach Anspruch 4, wobei eine Periode des periodischen Schalls oder eine Dauer, in der die Schallquelle ein- und/oder ausgeschaltet ist, länger als 0,5 Sekunden, bevorzugt länger als 1 Sekunde, bevorzugter länger als 2 Sekunden dauert.

6. Verfahren nach Anspruch 5, wobei der erste Schall eine Frequenz zwischen ungefähr 800 und ungefähr 1200 Hertz hat.

7. Verfahren nach einem der Ansprüche 1-6, wobei der Schallrecorder synchron mit der Schallquelle betrieben wird.

8. Verfahren nach einem der Ansprüche 1-7, ferner umfassend
- das Übertragen der Daten betreffend den Schall, übertragen von der Schallquelle über die kommunikative Verbindung von der Schallquelle zu dem Schallrecorder, wobei die Daten sich beispielsweise auf Frequenz, Modulation, Dauer und/oder Timing beziehen,
- das Vergleichen des empfangenen Schallsignals mit Daten betreffend den von der Schallquelle übertragenen Schall.

9. Verfahren nach einem der vorhergehenden Ansprüche, wobei das erste Kanalisationssystem eine Regenwasserkanalisation ist und das zweite Kanalisationssystem eine Abwasserkanalisation ist.

10. System (1) zum Prüfen, ob ein mindestens teilweise mit Gas gefülltes Rohr oder eine damit verbundene Abführvorrichtung mit einem ersten Kanalisationssystem (2) verbunden ist, umfassend
- eine Schallquelle (22) zum Erzeugen eines ersten Schalls in dem ersten Kanalisationssystem,
- einen Schallrecorder (18), versehen mit einem Kontaktmikrofon (30) zum Erkennen eines Schalls in dem Rohr oder der Abführvorrichtung; **dadurch gekennzeichnet, dass** die Schallquelle (22) und der Schallrecorder (28) drahtlos kommunikativ verbunden sind.

11. System nach Anspruch 10, wobei die Schallquelle angeordnet ist, einen Schall zu erzeugen, der zeitlich variiert, wie etwa ein periodischer Schall, oder wobei die Schallquelle angeordnet ist, abwechselnd den ersten Schall ein- und auszuschalten.

12. System nach Anspruch 10 oder 11, wobei der Schallrecorder eine Darstellungsvorrichtung umfasst, um den erkannten Schall akustisch und/oder visuell darzustellen.

13. System nach Anspruch 10, 11 oder 12, wobei der Schallrecorder angeordnet ist, um synchron mit der Schallquelle zu arbeiten.

14. System nach einem der Ansprüche 10-13, wobei die Schallquelle angeordnet ist, um die Daten betreffend den Schall, übertragen von der Schallquelle über die kommunikative Verbindung mit dem Schallrecorder, zu übertragen, wobei die Daten sich beispielsweise auf Frequenz, Modulation, Dauer und/oder Timing beziehen, und wobei der Schallrecorder angeordnet ist, um das empfangene Schallsignal mit Daten betreffend den von der Schallquelle übertragenen Schall zu vergleichen.

15. System nach einem der Ansprüche 10-14, wobei das System angeordnet ist, um zu bestimmen, ob der von dem Schallrecorder erkannte Schall mit dem von der Schallquelle erzeugten ersten Schall assoziiert ist.

## Revendications

1. Procédé pour vérifier si, oui ou non, une conduite au moins partiellement remplie d'un gaz, ou un dispositif de déversement monté sur celle-ci, est raccordé(e) à un premier réseau d'assainissement (2), le premier réseau d'assainissement étant parcouru par un son se propageant dans l'air, le premier son étant provoqué par une source de son (22) placée dans le premier réseau d'assainissement, comportant :
- la mise en place d'un enregistreur de son (28) muni d'un microphone de contact (30) contre, par exemple, une paroi de la conduite ou du dispositif de déversement (18.i),
- la détection, à l'aide du microphone de contact, d'un son dans ou au niveau de la conduite ou du dispositif de déversement, et
- la détermination de ce que, oui ou non, le son détecté est associé au premier son, le procédé étant **caractérisé par**
- l'établissement d'une liaison de communication radioélectrique entre la source de son (21) et l'enregistreur de son (28).

2. Procédé selon la revendication 1 pour vérifier si, oui ou non, la conduite au moins partiellement remplie d'un gaz, ou le dispositif de déversement monté sur celle-ci, est raccordé(e) au premier réseau d'assainissement ou à un second réseau d'assainissement (4) d'un réseau d'assainissement séparé, le second réseau d'assainissement étant parcouru par un second son se propageant dans l'air, différent du premier son se propageant dans l'air.

3. Procédé selon la revendication 1 ou 2, dans lequel la source de son est orientée en direction du premier réseau d'assainissement qui est en communication fluidique avec le dispositif de déversement.

4. Procédé selon la revendication 1, 2 ou 3, dans lequel la source de son génère un son tel qu'un son périodique variant dans le temps, ou dans lequel la source de son est alternativement mise en marche et arrêtée.

5. Procédé selon la revendication 4, dans lequel une période du son périodique ou une durée de marche ou d'arrêt de la source de son dure plus de 0,5 seconde, de préférence plus de 1 seconde, de préférence encore plus de 2 secondes.

6. Procédé selon la revendication 5, dans lequel le premier son a une fréquence d'environ 800 à environ 1200 hertz.

7. Procédé selon l'une quelconque des revendications 1 à 6, dans lequel l'enregistreur de son est amené à fonctionner en synchronisation avec la source de son.

8. Procédé selon l'une quelconque des revendications 1 à 7, comportant en outre
- La transmission, via la liaison de communication entre la source de son et l'enregistreur de son, des données concernant le son émis par la source de son, les données étant par exemple relatives à la fréquence, la modulation, la durée et/ou le cadencement,
- la comparaison du signal de son reçu avec des données concernant le son émis par la source de son.

9. Procédé selon l'une quelconque des revendications précédentes, dans lequel le premier réseau d'assainissement est un égout pour eaux pluviales et le second réseau d'assainissement est un égout pour eaux usées.

10. Système (1) pour vérifier si, oui ou non, une conduite au moins partiellement remplie d'un gaz, ou un dispositif de déversement monté sur celle-ci, est raccordé(e) à un premier réseau d'assainissement (2), comportant
- une source de son (22) pour générer un premier son dans le premier réseau d'assainissement,
- un enregistreur de son (28) muni d'un microphone de contact (30) pour détecter un son dans la conduite ou le dispositif de déversement ;
**caractérisé en ce que** la source de son (22) et l'enregistreur de son (28) communiquent par voie radioélectrique.

11. Système selon la revendication 10, dans lequel la source de son est conçue pour générer un son variant dans le temps, tel qu'un son périodique, ou dans lequel la source de son est conçue pour alternativement émettre et couper le premier son.

12. Système selon la revendication 10 ou 11, dans lequel l'enregistreur de son comprend un dispositif de représentation pour représenter auditivement ou visuellement le son détecté.

13. Système selon la revendication 10, 11 ou 12, dans lequel l'enregistreur de son est conçu pour fonctionner en synchronisation avec la source de son.

14. Système selon l'une quelconque des revendications 10 à 13, dans lequel la source de son est conçue pour transmettre à l'enregistreur de son, via la liaison de communication, les données concernant le son émis par la source de son, les données étant par exemple relatives à la fréquence, la modulation, la durée et/ou le cadencement, et dans lequel l'enregistreur de son est conçu pour comparer le signal de son reçu avec des données concernant le son émis par la source de son.

15. Système selon l'une quelconque des revendications 10 à 14, dans lequel le système est conçu pour déterminer si, oui ou non, le son détecté par l'enregistreur de son est associé au premier son généré par la source de son.
